# EUROPEAN PATENT SPECIFICATION

(11) **EP 0 424 794 B1**
(45) Date of publication and mention of the grant of the patent: **15.02.1995**
(21) Application number: 90119937.2
(22) Date of filing: 17.10.1990
(51) Int. Cl.: C12G 3/08, C12C 11/00

(54) **A process for the production of non-alcoholic malt beverage**
Verfahren zur Herstellung eines alkoholfreien Malzgetränkes
Procédé pour la production d'une boisson non alcoolisée à base de malt

(30) Priority: 27.10.1989 FI 895116
(43) Date of publication of application: 02.05.1991
(73) Proprietor: Cultor Ltd., 00240 Helsinki (FI)
(72) Inventor: Lommi, Heikki, SF-02460 Kantvik (FI); Swinkels, Wilhelmus, NL-5741 GC Beek En Donk (NL); Van Dieren, Bernardus, NL-5491 KE St. Oedenrode (NL)
(74) Representative: Hansen, Bernd, Dr. Dipl.-Chem.

(56) References cited:
- EP-A- 213 220
- EP-A- 0 361 165
- FR-A- 2 526 274
- GB-A- 2 021 146
- GB-A- 2 085 449
- BIOTECHNOLOGY, vol. 3, no. 5, May 1985, New York, NY (US); T. ONAKA et al., pp. 467-470#

## Description

The invention relates to a process for the production of substantially non-alcoholic beer (that is, a beverage having the taste characteristics of beer) by a continuous yeast treatment at a low temperature. The process utilizes a packed column reactor containing immobilized yeast preferably reactivated at intervals of 2 to 30 days. The temperature of the column reactor ranges between the freezing point of wort and +10°C, and the wort is introduced into the reactor at a rate between 0.1 and 2.5 reactor volumes per hour.

As used in different countries, the concept "non-alcoholic beer" refers to different kinds of products: in Spain, a product having an alcohol content of less than 1% is regarded as non-alcoholic while in Holland the limit is 0.5%. In the Arab countries, the alcohol content of non-alcoholic beer must not exceed about 0.05% by volume. In the U.S. and some other countries, a beverage having an alcohol content of less than 0.5% must not be called beer.

It is known from the prior art to produce nonalcoholic beer by batch-type processes, which, however, are difficult to carry out (see e.g. U.S. Patents 4,746,518 and 4,661,355). Wort is treated at a low temperature of about 0°C to prevent the formation of alcohol. In batch-type processes it has proved difficult to keep the process parametres, such as the delay, the temperature, and the concentration of dissolved oxygen, precisely at the desired values (at equilibrium). Even a minor deviation from the desired values may result in the formation of alcohol, so that the alcohol content of the product obtained is in excess of the value allowed in, for instance, the Arab countries, that is, 0.05% by volume.

Furthermore, a process is known from the prior art for the production of non-alcoholic drinks at a relatively low temperature, 2 to 15°C (EP-A-0 213 220). In the process, aerated wort is passed rapidly through a reactor containing immobilized yeast. This process, however, is not particularly suitable for continuous production because the reactor clogs in a very short time.

GB-A-2 021 146 reveals a method of producing beer having a low alcohol content which comprises fermenting an unaerated wort obtained from a malt mash under an atmosphere of substantially oxygen-free carbon dioxide until the desired alcohol content is reached. Preferably, the fermentation is carried out at a temperature of 3-7°C. The fermentation time is preferably 1-5 days, typically from 3-4 days.

EP-A-0 361 165, representing prior art according to Art. 54(3) EPC, refers to a method for producing an ethanolic product including an ethanol concentration of from 0.05 to 15%, according to which an aqueous substrate containing a fermentable sugar is passed through a reactor containing yeast cells immobilized on the surfaces of a substantially non-compressible carrier having anion exchange properties. The temperature for this process ranges between -2 to 40°C.

The process of the invention enables continuous industrial production of beer with a very low alcohol content or even substantially non-alcoholic beer meeting the strict alcohol regulations in the Arab countries. The entire production process can be completed as rapidly as within 1 to 2 days.

Essential in the process of the invention is that the yeast treatment is carried out at a low temperature by a continuous process by means of a packed column reactor containing immobilized yeast bonded to the surface of a substantially incompressible carrier having anion exchange properties, and oxygen is removed from the wort before being passed into the reactor. The carrier is composed of a continuous porous matrix, or alternatively, of dimpled or reticulated porous particles. The matrix or particles, in turn, are composed of individual microparticles or microfibres. This carrier structure provides a maximal surface area for the immobilization of yeast cells.

The particulate or matrix character of the carrier is produced by loosely binding, felting, weaving, gluing or agglomerating (hereinafter binding) the microparticles or microfibres together. The binding is accomplished by establishing chemical, adherent or mechanical links at some of the contact points between the individual microparticles or microfibres. Chemical binding is accomplished by causing a chemical cross-linking reaction at these points. Adherent binding is accomplished by agglomerating or gluing the microfibres or microparticles together through the use of an additional ingredient such as a thermoplastic resin. Mechanical binding is accomplished by entangling or knotting the fibres at the contact point or by joining the particles by meshing their surfaces together. In the latter form, the matrix will comprise a continuous structure throughout the reactor, much like cotton fluff of filter paper packed into a tube. Also then, in their final form, the particles will be discrete and individual.

The microfibres or microparticles are composed of any anion exchange substance that can be formed into the desired, rough-surfaced microfibres or microparticles. These substances include native or regenerated cellulose or rayon that is derivatized to provide anion exchange character; synthetic anion exchange resins such as phenolformaldehyde resins, and agarose or dextrin based anion exchange resins. The preferred carrier is a porous, particulate anion exchange resin derived from cellulose or rayon that has been chemically modified to provide anion exchange character. Especially preferred embodiments include microfibres or microparticles of diethylaminoethylene substituted cellulose, adherently bound by agglomeration with polystyrene.

It is believed that the electric forces established between the positively charged resin and the negatively charged yeast cells are primarily responsible for the binding of yeast cells to the surfaces of the resin. This binding minimizes substantially the leaching of the yeast yet permits intimate contact between the yeast and the wort.

A packed column reactor has a very high cell content. The system is very suitable for the production of substantially non-alcoholic beer since the fermentation ability of the reactor is easy to control by selecting suitable temperature and flow rate. Beer produced according to the invention contains substantially no yeast cells and is generally very clear, so the final filtration is easy to carry out. Losses of beer are negligible.

In the present invention, the yeast treatment temperature ranges between the freezing point of the wort and +10°C, being preferably between 0.5 and 3°C if substantially non-alcoholic beer is to be produced. The alcohol content depends not only on the temperature but also on the rate at which the wort is passed through the reactor and the number of yeast cells. If non-alcoholic beer is to be obtained, the delay in the column is typically as short as 1 to 2 hours. The wort is prepared from conventional brewing ingredients, that is, mainly from beer, malt and water. In the production of substantially non-alcoholic beer, greater amounts of adjunct (maize, rice and syrups) can be used. In the production of wort, hop or hop extract, pH adjusting agents and calcium salts are also needed. If desired, flavourants and colouring agents as well as stabilizers can be used as additive.

In addition, it is essential in the process of the invention that the clarified wort is treated at elevated temperature by evaporating or by an absorbing agent to remove undesirable taste components. Suitable absorbing agent is activated carbon.

In a preferred method, the wort is "hot stripped" to wash out undesirable volatiles. Hot stripping consists of a vigorous percolation of gas, for example CO₂ or N₂, preferably N₂, through the liquid. The hot stripping is beneficial for two reasons:
1. No oxidation takes place if the liquid is pumped from the cooking vessel to the whirlpool because the stripping gas flows directly through the pipe into the wort and expands in the whirlpool. In this way the wort will not absorb oxygen.
2. In a normal beer production process volatiles will be washed out by fermentation and maturation. By using hot stripping, no natural percolation of gas takes place; the hot stripping effectively replaces the natural percolation during fermentation.

Further, it is essential that the yeast is reactivated at intervals of 2 to 30 days, preferably at intervals of one week. The reactivation is carried out by circulating aerated wort at 10 to 15°C for 10 to 30 hours, preferably for one day. This involves rapid growth of the yeast. The reactivation is stopped by temperature fall below 3° and by displacement of the fermented wort. As the introduction of wort into the reactor is restarted, yeast cells are removed out of it during a couple of hours, whereafter the continuous yeast treatment can begin.

The packed column reactor can be regenerated by first displacing the wort from the reactor by hot water and by feeding hot caustic soda through the carrier bed until the colour of discharged regeneration solution is uniformly bright. Then the carrier bed is rinsed with water until a pH of about 10 is achieved and neutralized by pumping a suitable dilute acid through the carrier bed. Finally, the carrier is rinsed with water.

The following examples are illustrative of the invention. The working examples are not to be regarded as restrictive to the invention, but the characteristic features of the invention are disclosed in the claims.

### Example 1

### Preparation of the packed column reactor

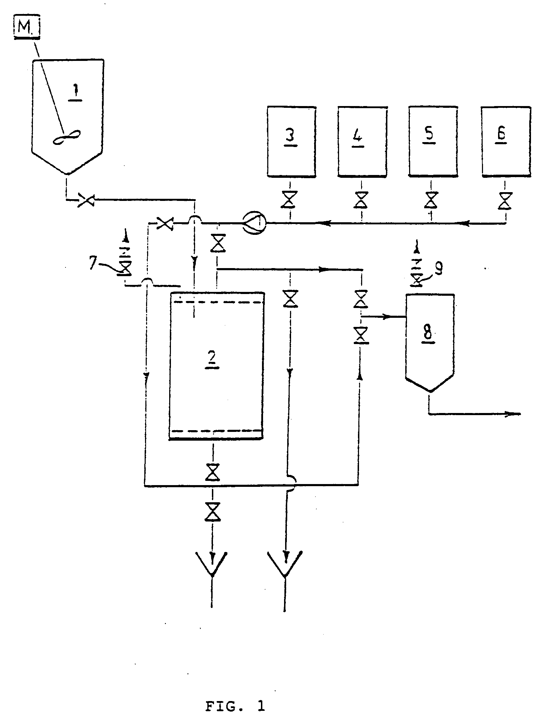

Granular DEAE cellulose (GDC) manufactured by Cultor Ltd. according to U.S. Patent 4,355,117 and having a particle size of 470 to 840 micrometres was used as a carrier. In all the experiments, the column was filled, the system was sterilized, and the yeast immobilized according to the following procedure:
With reference to Figure 1, a hydration vessel 1 was first filled half full with water (1000 1). The mixer was started and dry carrier (GDC; 400 kg) was transferred to the vessel 1. When the hydration was completed (about 10 hours), the immobilized yeast reactor 2 was filled half full with water (800 1) and the carrier water slurry from the hydration vessel 1 was transferred to the reactor 2. In order to maintain a constant water level in the reactor, the bottom valve on the reactor was adjusted so that the inlet and outlet flows from the reactor were substantially equal. The carrier bed in the rector was then sterilized with hot dilute caustic soda 3 by pumping it through the reactor 2. The carrier bed was then rinsed with water and neutralized by pumping diluted acid (citric acid) 4 through the carrier bed in the reactor 2. Finally, the carrier bed was rinsed with water, which was displaced by aerated wort.

A yeast slurry (10¹⁰ cells/ml) was made up in a vessel 5 in the aerated wort. The yeast slurry was then circulated through the carrier bed for about 4 hours, whereby the yeast was bound to the carrier. Now the reactor 2 was ready for use in the process.

### Example 2

### Production and pretreatment of wort

The wort was produced by mashing 4,800 kg of barley malt and 3,960 kg of maize grits.

The barley malt was mixed with 15,500 litres of water (35°C), and the pH was adjusted to 5.5 (citric acid). The mixture of malt and water was mashed in a vessel temperature programmed for an infusion method as follows: at 38°C for 20 minutes, at 68° for 10 minutes, at 72°C for 30 minutes and at 76°C for 30 minutes.

The maize grits were mixed with 13,000 litres of water (68°C) and the pH was adjusted to 5.5. Mashing programme: at 68°C for 20 minutes and at 100°C for 20 minutes.

The malt and maize mashes were combined, and the wort was separated from the solids in a lautertun and boiled in a wort copper at about 100°C for about 90 minutes. After pH adjustment (5.1) hop extract (containing 2,800 g of alpha acids ) was added to the boiling wort. About ten minutes before the boiling was completed, 10 kg of activated carbon was added. A hot stripping stage, consisting of vigorous percolation of gas, in this case nitrogen gas, was also included to wash out undesirable volatiles. The mixture was transferred into a whirlpool, simultaneously evaporating (about 15% of the liquid volume). The hot break separated in about 30 minutes.

Finally, the pH was adjusted (4.3; citric acid) and the wort was cooled in a plate heat exchanger to about 0°C, filtered, and transferred to a suitable container.

### Example 3

### Yeast treatment and reactivation of the yeast reactor

The wort of Example 2 was fed into the packed column reactor of Example 1. The yeast strain used was Saccharomyces uvarum low fermentation yeast; the used volume of the yeast bed was 1 m³; the wort feed rate was 750 l/hour and the temperature varied from 1.5 to 3.0°C (adjusted so that the alcohol level of the product was about 0.05 vol.-%).

After the wort of Example 2 had been passed through the reactor for eight days, the immobilized yeast reactor was reactivated by circulating aerated wort at 12° for 24 hours. The wort fermented during the reactivation was replaced by fresh wort, the temperature being again lowered below 3°C; the reactor was allowed to stand for about 2 hours, whereafter the production of non-alcoholic beer was continued as described above.

### Example 4

### Regeneration of the reactor

The packed column reactor used in the examples was regenerated by feeding a hot (about 60°C) caustic soda solution (2% sodium hydroxide) through the reactor until the colour of discharged regeneration solution was uniformly bright. The column was rinsed with water until the pH of the discharged solution was about 10, and neutralized with sodium pyrosulphite to a pH of about 7. The reactor was rinsed with water and filled with wort, whereafter the yeast slurry was introduced into the reactor (about 10¹⁰ yeast cells/litre of carrier) and thereafter aerated wort for 24 hours. The reactor so regenerated could be used as such in the process.

## Claims

1. A process for the production of substantially non-alcoholic beer from clarified wort by a continuous yeast treatment in a packed column reactor containing immobilized yeast at a low temperature, characterized in that
the packed column reactor contains a substantially incompressible carrier having anion exchange properties, the yeast cells being immobilized on the surface of the carrier,
the oxygen is removed from the wort before the wort is passed into the reactor, and
the wort is passed through the reactor at a temperature ranging between the freezing point of wort and + 10°C.

2. The process according to claim 1, characterized in that the oxygen is removed from the wort by evaporation.

3. A process according to any of the preceding claims, **characterized** in that the temperature of the packed column reactor ranges from 0.5 to 3°C and the wort is passed through the reactor at a rate between of 0.5 and 1.5 reactor volumes per hour.

4. A process according to any of the preceding claims, **characterized** in that clarified wort is evaporated at elevated temperature before being passed into the reactor.

5. A process according to any of the preceding claims, **characterized** in that clarified wort is treated with an absorbing agent before being passed into the reactor.

6. A process according to any of the preceding claims, **characterized** in that the clarified wort is treated in a hot stripping stage before being passed into the reactor.

7. A process according to any of the preceding claims, **characterized** in that the hot stripping comprises vigorous percolation of N₂ gas through the wort.

8. A process according to any of the preceding claims, **characterized** in that the hot stripping comprises vigorous percolation of CO₂ gas through the wort.

9. A process according to any of the preceding claims, **characterized** in that the wort is passed into the reactor at a rate of between about 0.1 and about 2.5 reactor volumes per hour.

10. A process according to any of the preceding claims, **characterized** in that the yeast is reactivated at intervals of 2 to 30 days by circulating aerated wort at 10 to 15°C for 10 to 30 hours.

## Patentansprüche

1. Verfahren zur Herstellung von im wesentlichen alkoholfreien Bier aus geklärter Hefe durch eine kontinuierliche Hefebehandlung in einem, immobilisierte Hefe enthaltenden gepackten Säulenreaktor bei einer niedrigen Temperatur, dadurch **gekennzeichnet,** daß
der gepackte Säulenreaktor einen im wesentlichen nicht komprimierbaren Träger mit Anionenaustauschereigenschaften enthält, wobei die Hefezellen auf der Oberfläche des Trägers immobilisiert sind,
der Sauerstoff aus der Stammwürze bevor die Stammwürze in den Reaktor eingeleitet wird, entfernt wird, und
die Stammwürze durch den Reaktor bei einer Temperatur im Bereich zwischen dem Gefrierpunkt der Stammwürze und +10°C durchgeleitet wird.

2. Verfahren nach Anspruch 1, dadurch **gekennzeichnet,** daß der Sauerstoff aus der Stammwürze durch Verdampfung entfernt wird.

3. Verfahren nach einem der vorhergehenden Ansprüche, dadurch **gekennzeichnet,** daß die Temperatur des gepackten Säulenreaktors im Bereich von 0,5 bis 3°C liegt, und die Stammwürze durch den Reaktor mit einer Rate von 0,5 bis 1,5 Reaktorvolumen pro Stunde durchgeleitet wird.

4. Verfahren nach einem der vorhergehenden Ansprüche, dadurch **gekennzeichnet,** daß die geklärte Stammwürze bei erhöhter Temperatur vor Einleiten in den Reaktor verdampft wird.

5. Verfahren nach einem der vorhergehenden Ansprüche, dadurch **gekennzeichnet,** daß die geklärte Stammwürze mit einem Absorptionsmittel vor Einleitung in den Reaktor behandelt wird.

6. Verfahren nach einem der vorhergehenden Ansprüche, dadurch **gekennzeichnet,** daß die geklärte Stammwürze durch ein Heißabscheidungsverfahren vor Einleitung in den Reaktor behandelt wird.

7. Verfahren nach einem der vorhergehenden Ansprüche, dadurch **gekennzeichnet,** daß die Heißabscheidung heftige Perkolation von N₂-Gas durch die Stammwürze umfaßt.

8. Verfahren nach einem der vorhergehenden Ansprüche, dadurch **gekennzeichnet,** daß die Heißabscheidung heftige Perkolation von CO₂-Gas durch die Stammwürze umfaßt.

9. Verfahren nach einem der vorhergehenden Ansprüche, dadurch **gekennzeichnet,** daß die Stammwürze in den Reaktor mit einer Rate von 0,1 bis 2,5 Reaktorvolumen pro Stunde eingeleitet wird.

10. Verfahren nach einem der vorhergehenden Ansprüche, dadurch **gekennzeichnet,** daß die Hefe in Abständen von 2 bis 30 Tagen durch zirkulierende belüftete Stammwürze bei 10 bis 15°C für 10 bis 30 Stunden reaktiviert wird.

## Revendications

1. Procédé pour la fabrication d'une bière pratiquement sans alcool à partir de moût clarifié par un traitement en continu de levure dans un réacteur à colonne garnie contenant de la levure immobilisée à basse température, caractérisé en ce que :
- le réacteur à colonne garnie contient un support pratiquement incompressible ayant des propriétés d'échange d'anions, les cellules de levure étant immobilisées sur la surface du support,
- l'oxygène est enlevé du moût avant que le moût soit introduit dans le réacteur, et
- le moût est introduit dans le réacteur à une température comprise entre le point de congélation du moût et +10°C.

2. Procédé selon la revendication 1, caractérisé en ce que l'oxygène est enlevé du moût par évaporation.

3. Procédé selon l'une quelconque des revendications précédentes, caractérisé en ce que la température du réacteur à colonne garnie est comprise entre 0,5 et 3°C, et le moût traverse le réacteur à un débit compris entre 0,5 et 1,5 volume de réacteur par heure.

4. Procédé selon l'une quelconque des revendications précédentes, caractérisé en ce que du moût clarifié est évaporé à une température élevée, avant d'être introduit dans le réacteur.

5. Procédé selon l'une quelconque des revendications précédentes, caractérisé en ce que le moût clarifié est traité avec un agent absorbant avant d'être introduit dans le réacteur.

6. Procédé selon l'une quelconque des revendications précédentes, caractérisé en ce que le moût clarifié est traité dans un étage d'extraction à chaud, avant d'être introduit dans le réacteur.

7. Procédé selon l'une quelconque des revendications précédentes, caractérisé en ce que l'extraction à chaud comprend une percolation vigoureuse de N₂ gazeux dans le moût.

8. Procédé selon l'une quelconque des revendications précédentes, caractérisé en ce que l'extraction à chaud comprend une percolation vigoureuse de CO₂ gazeux dans le moût.

9. Procédé selon l'une quelconque des revendications précédentes, caractérisé en ce que le moût est introduit dans le réacteur à un débit compris entre environ 0,1 et 2,5 volumes de réacteur par heure.

10. Procédé selon l'une quelconque des revendications précédentes, caractérisé en ce que la levure est réactivée à des intervalles de 2 à 30 jours avant la mise en circulation du moût aéré à 10-15°C pendant 10-30 heures.
